# EUROPEAN PATENT SPECIFICATION

(11) **EP 4 230 895 B1**
(45) Date of publication and mention of the grant of the patent: **30.07.2025**
(21) Application number: 22157083.1
(22) Date of filing: 16.02.2022
(51) Int. Cl.: F16H 3/089, F16H 3/12, F16H 3/08

(54) **2-SPEED TRANSMISSION WITH A DOG CLUTCH SHIFT MECHANISM**
2-GANG-GETRIEBE MIT EINEM KLAUENKUPPLUNGSSCHALTMECHANISMUS
TRANSMISSION À 2 VITESSES COMPORTANT UN MÉCANISME D'EMBRAYAGE À GRIFFES

(43) Date of publication of application: 23.08.2023
(73) Proprietor: Volvo Car Corporation, 40531 Göteborg (SE)
(72) Inventor: Widmark, Martin, 468 33 Vargön (SE); Åberg, Emil, 417 26 Göteborg (SE)
(74) Representative: Nederlandsch Octrooibureau

(56) References cited:
- WO-A1-2015/014453
- US-A1- 2016 003 326
- US-A1- 2016 017 968
- US-A1- 2016 084 350

## Description

### Technical Field

The present invention relates to two-speed transmissions for electric vehicles. The present invention also relates to a method for performing gear shifting in a two-speed transmission assembly in electric vehicles.

### Background Art

**A** characteristic of electric vehicles is that the electric motor can be operated over its full speed range with a single-speed transmission between the motor and the differential. However, two-stage transmission assemblies are currently commonly used in electric vehicles, in order to increase the efficiency of the electric motor over the vehicle driving speed range. Shifting between the first and the second gear, representing a first speed mode and a second speed mode of the electric vehicle, respectively, is generally performed by the electric control unit, ECU, controlling operation of a clutch.

Conventionally, the drive torque is transferred by the clutch. Therefore, the clutch is exposed to all torque transferred during driving, and needs to be designed to cope with all torque transferred.

During shifting between the two gears of the two-stage transmission, a torque drop, also known as transmission shock, often occurs, which leads to a loss in efficiency of the transmission. It may also cause discomfort to the driver and passengers of the vehicle.

These issues have conventionally been addressed by using configurations including double friction clutches or a single friction clutch paired with a one way clutch in two-speed transmission assemblies. A well-known example of a two-stage transmission for electrically driven vehicles is an assembly including a dog clutch and a friction clutch, arranged such that in a first speed mode the dog clutch is fastened and the friction clutch is not fastened, whereas in the second speed mode, the dog clutch is not fastened and the friction clutch is fastened. When shifting gears in such systems, at an instant both the dog clutch and the friction clutch are not fastened, which leads to a transmission shock.

This problem has conventionally been addressed by additionally including a ratchet-type one-way clutch. This however provides a rather complex construction. Furthermore, since the friction clutch is an active clutch requiring the application of force to remain in its closed, or fastened, position, energy needs to be provided to the assembly during driving in the second speed mode.
Other transmissions for electric vehicles and methods for gear shifting using those transmissions are disclosed in US 2016/0003326 A1, US 2016/0084350 A1, US 2016/017968 A1 and WO 2015/014453 A1.

It is therefore an object of the present invention to provide a transmission, in particular a two-speed transmission, for electric vehicles having improved efficiency as compared to known two-speed transmission assemblies. It is a further object to minimize, or at least reduce, driving torque loss during gear shifting in electric vehicles.

It is a further object to provide a two-speed transmission for battery electric vehicles having a light weight and compact design.

### Summary

According to the invention, this object is solved by a transmission assembly for an electric vehicle, the transmission assembly comprising a first gear and a second gear, the transmission assembly further comprising:
- a torque transfer clutch mechanism; and
- a power-shift clutch;

the torque transfer clutch mechanism being configured to transfer torque when the transmission assembly is operating in either one of the first gear and the second gear; and
the power-shift clutch being configured to transfer torque only during gear shifting.

The transmission assembly may be a two-speed transmission assembly, enabling shifting between two different drive modes.

When shifting gears, the torque transfer clutch mechanism, which is arranged to transfer torque during normal driving in the first gear or the second gear, will for an instance not transfer torque. As described above, if not applying power-shift during gear shifting, this may result in a torque drop, which may be experienced as a shock and
causing discomfort to the driver of the vehicle. By activation, or closing, of the power-shift clutch, power-shift can be applied during gear-shifting.

Thereby, a transmission assembly is provided by the present invention, enabling down-shifting from a second to a first gear substantially without torque drop, using a relatively simple and reliable construction.

The transmission assembly may be a two-speed transmission assembly.

According to the invention, the power-shift clutch is arranged to transfer torque during down-shifting from the second gear to the first gear. The power-shift clutch is configured to transfer torque only during down-shifting from the second gear to the first gear. This may be achieved by arranging the power-shift clutch such that, upon activation of the power-shift clutch, a force can be applied to the first gear through the power-shift clutch. As will be described further below, this may enable power-shift during gear-shifting, in order to avoid torque drop during gear switching.

By providing power-shifting while shifting from the second to the first gear, torque transfer to the wheels of the vehicle is maintained during the gear shifting sequence, during which the torque transfer clutch mechanism is opened. Thereby, torque drop while shifting gears can be avoided or at least significantly reduced. Further, a compact and light-weight construction can be achieved.

In particular, a single torque transfer clutch mechanism is provided, for use while driving on either one of the first gear and on the second gear. As will be described further below, the torque transfer clutch mechanism is configured to be shifted such as to engage with either one of the first gear and the second gear, or to be in a neutral position.

The torque transfer clutch mechanism may be a dog clutch mechanism. Thereby, torque can be transferred during normal driving in either one of the gears, without providing energy to the clutches of the transmission assembly. No energy needs to be supplied in order to keep the gear engaged. Thereby, an energy efficient transmission assembly can be achieved. This provides a simple construction.

The torque transfer clutch mechanism may comprise a shift sleeve arranged to be moved between a first position for driving in the first gear and a second position for driving in the second gear. When the shift sleeve is closed in the first position, the first gear is in driven connection with a first tooth wheel connected to the input shaft of the transmission assembly, i.e., is driven by the electric motor. When the shift sleeve is closed in the second position, the second gear is in driven connection with a second tooth wheel connected to the input shaft.

The power-shift clutch may be an active clutch, such as a friction clutch. The power-shift clutch can be any kind of axial or radial, wet or dry clutch.

The transmission assembly may comprise a single power-shift clutch. This is sufficient for providing power-shift when down-shifting from the second gear to the first gear, and provides a compact and light-weight construction, having a relatively simple design compared to conventional two-speed transmission assemblies.

The transmission assembly may be configured to perform speed synchronization of the electric motor with the speed of the vehicle wheels during gear-shifting through activation of the powershift clutch. In particular, this may be performed based on an input signal from the electric motor, which is coupled to the input shaft of the transmission assembly.

The first gear may be configured to be operative throughout a driving speed range of the vehicle and the second gear is configured to be operative in an upper part of the driving speed range, preferably during driving at substantially constant speed. That is, the electric vehicle can be driven on the first gear throughout its full driving speed. The second gear may be an additional gear, constructed for substantially constant driving at higher speeds, such as cruising, for example on high-ways. That is, the second gear may be a gear provided for economical driving in an upper driving speed range of the electric vehicle.

In the second gear, the electric motor is operating at lower motor speed than in the first gear, under the assumption of the vehicle speed, i.e., the driving speed of the vehicle, being substantially constant when driving in the second gear.

In such systems, shifting from the first gear to the second gear is usually performed, upon initiation by the ECU, at a time when a gear shift with torque interruption is likely to be less noted by, and hence less disturbing to, the driver of the vehicle. Shifting from the second gear down to the first gear is initiated upon the ECU detecting that the driver wants to be more active in the driving of the vehicle, e.g. by requiring more torque from the engine. In such situation, a torque drop would be noted by the driver and generally experienced as disturbing, and typically causing reduced driving comfort.

The transmission assembly according to the present invention addresses this problem by applying power-shift during the gear shifting sequence from the second to the first gear, hence facilitating shifting from the second to the first gear substantially without interruption of torque provided to the driven wheels of the vehicle.

The present invention hence provides the use of a passive torque transfer clutch mechanism, such as dog clutch mechanism, in combination with a friction clutch which is only active during a gear shifting sequence, which is usually of very short duration, usually less than 0.5 seconds, more typically less than 0.3 seconds. This provides for efficient gear-shifting in a transmission assembly according to the present disclosure.

The present invention further relates to a method of gear shifting from a second gear to a first gear in an electric vehicle having an electric motor, in the second gear the electric motor being operating at a lower speed than in the first gear, the method comprising:
- opening a torque transfer clutch mechanism which is closed in a second position corresponding to the second gear;
- closing a power-shift clutch to transfer torque through the power-shift clutch;
- changing the torque transfer clutch mechanism to a first position corresponding to the first gear and closing the torque transfer clutch mechanism in the first position; and
- opening the power-shift clutch.
According to the method according to the present invention, power-shift can be applied during gear-shifting by activation of the power-shift clutch. Hence. the method of the present invention enables down-shifting from a second gear to a first gear substantially without torque drop, using a relatively simple and reliable transmission construction.

The gear shifting sequence, i.e., the shift from the second gear to the first gear, may be initiated and controlled by the electric control unit, ECU, of the vehicle.

The power-shift clutch may be open when driving in either one of the first gear and the second gear.

The method may further comprise the following steps:
- prior to opening the torque transfer clutch mechanism, the power-shift clutch starts to engage with the first gear;
- the torque transfer clutch mechanism opens and moves to a neutral position; and
- speed synchronization between the electric motor and the vehicle wheels is performed by applying further force to the powershift clutch.

Still further, the method may comprise the following step: when speed synchronization has been reached:
- the torque transfer clutch mechanism is changed to the first position and subsequently closed; and
- the power-shift clutch is opened.

The gear shifting method according to the present invention is performed using the transmission assembly described herein above.

The transmission assembly and the gear-shifting sequence in such transmission assembly, according to the present invention, can be applied to different types of electric vehicles, including battery electric vehicles, also referred to as all electric vehicles, as well as hybrid vehicles combining electric driving with another propulsion means.

As can be understood from the above, the present invention relates to transmission assemblies for electric vehicles and methods for performing gear shifting using such transmission assemblies.

A transmission assembly for an electric vehicle is provided, the two-stage transmission assembly comprising a first gear and a second gear. The transmission assembly is configured to apply power-shifting during down-shifting from the second gear to the first gear. The transmission assembly may be configured to apply power-shifting only when down-shifting from the second gear to the first gear, but not when shifting from the first gear to the second gear.

### Brief description of the Drawings

A transmission assembly and associated gear shifting according to the present invention will, by way of non-limiting example, be described in detail with reference to the accompanying drawings.
In the drawings:
Fig. 1A to 1F schematically illustrate a gear shifting sequence from the second gear to a first gear, according to embodiments of the present invention;
Fig. 2 shows a flow diagram of the gear shifting sequence illustrated in Fig. 1B to 1F.

### Detailed Description

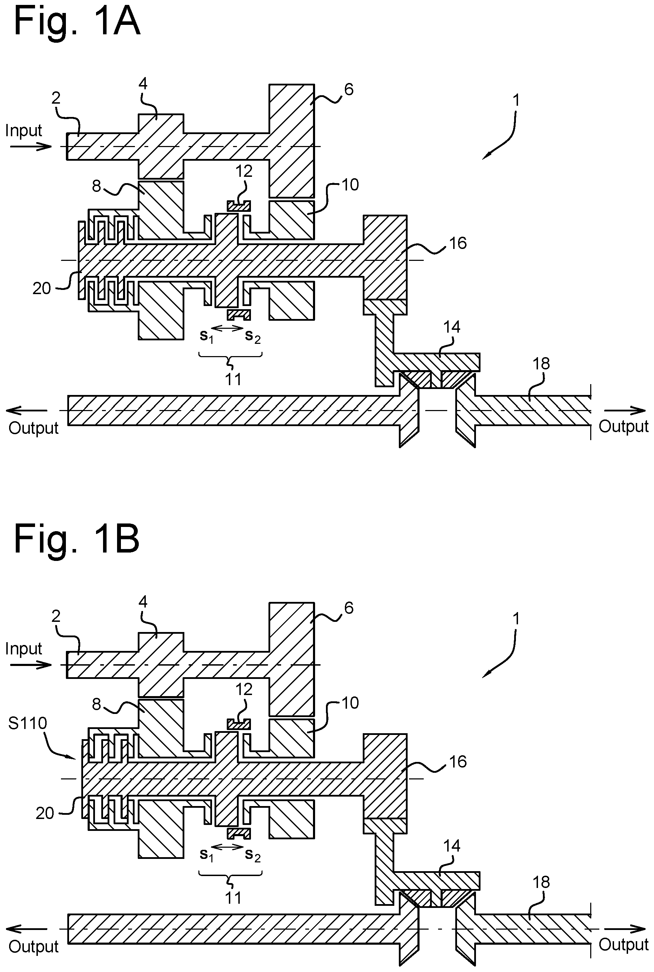

Fig. 1A schematically shows an embodiment of a two-speed transmission assembly 1 according to the present invention. The transmission assembly comprises an input shaft 2, which is connected to the output of an electric motor (not shown) of an electric vehicle when the assembly is mounted in the electric vehicle. The input shaft can, through first and second tooth wheels 4, 6, be coupled to a first gear 8 and a second gear 10, respectively. When connected to the first gear, the vehicle drives in a first speed mode. As described herein above, the first gear can be used throughout the full driving speed range of the vehicle. When instead connected to the second gear, the vehicle drives in a second driving speed mode. As described herein above, this may be an eco-driving mode, typically used when driving at substantially constant speed, such as high-way driving.

Under the assumption of a substantially constant vehicle speed, the motor speed, i.e., the rotational speed of the output shaft of the electric motor, is lower when the transmission assembly is in the second gear than when in the first gear.

The assembly further comprises a dog clutch mechanism 11, which is closed when driving in either one of the first or second gear. The dog clutch hence acts as a torque transfer clutch mechanism, transferring torque from the electric motor to the wheels of the vehicles through the differential 14 connecting the layshaft 16 to an output shaft 18 of the transmission assembly. The dog clutch mechanism enables coupling rotating elements in a simple manner, as is known to the person skilled in the art. It offers a passive way of coupling, i.e., no energy needs to be applied to maintain the coupling, once in position. According to the present embodiment, the dog clutch mechanism 11 may be realized through a radial shift sleeve 12. However, alternatively other types of passive couplings could be used.

In the situation illustrated in Fig. 1A, the shift sleeve 12 is positioned in the second position, S₂. When the shift sleeve is in this position, the second tooth wheel 6 is in connection with the tooth wheel of the second gear 10. The vehicle is then driven in the second speed mode, i.e., the cruising mode.

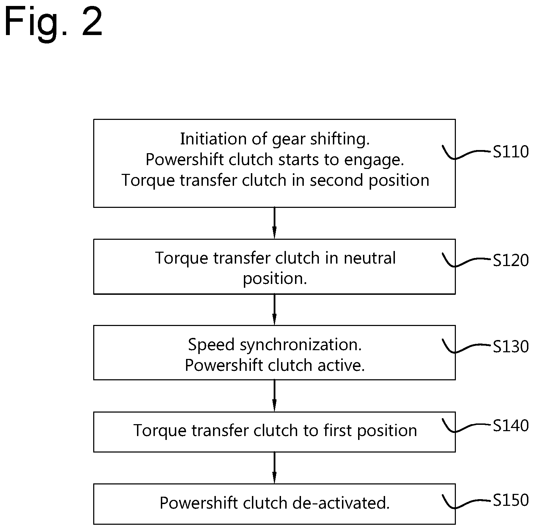

The transmission assembly 1 further comprises a powershift clutch 20, arranged in connection to the first gear 8. In the situation illustrated in Figure 1A, corresponding to normal driving in the second gear, the powershift clutch 20 is open. As will be described with reference to Figures 1B to 1E, the powershift clutch 20 is activated when shifting from the second gear to the first gear. The powershift clutch 20 may be a friction clutch. The powershift clutch is hence an active clutch, to which energy is provided in order to apply and maintain the coupling force. However, since the powershift clutch is only active during gear-shifting, energy consumption is reduced in comparison to conventional two-speed transmission assemblies where in at least one of the speed modes an active clutch is used. The gear shifting sequence illustrated in Figures 1B to 1F and described herein below is also illustrated in the schematic flow diagram shown in Figure 2.

In Figure 1B, gear shifting from the second gear to the first gear is initiated, under control of the electric control unit, ECU (not illustrated) of the vehicle. The powershift clutch 20 starts to engage, S110, i.e., starts closing. Gear shifting can be initiated by the ECU based on, e.g., the ECU detecting or receiving a signal that the driver of the vehicle requires more torque, e.g., by pressing the gas pedal. This is interpreted as that the driver wants to drive more actively, and that gear shifting to the first gear should be initiated.

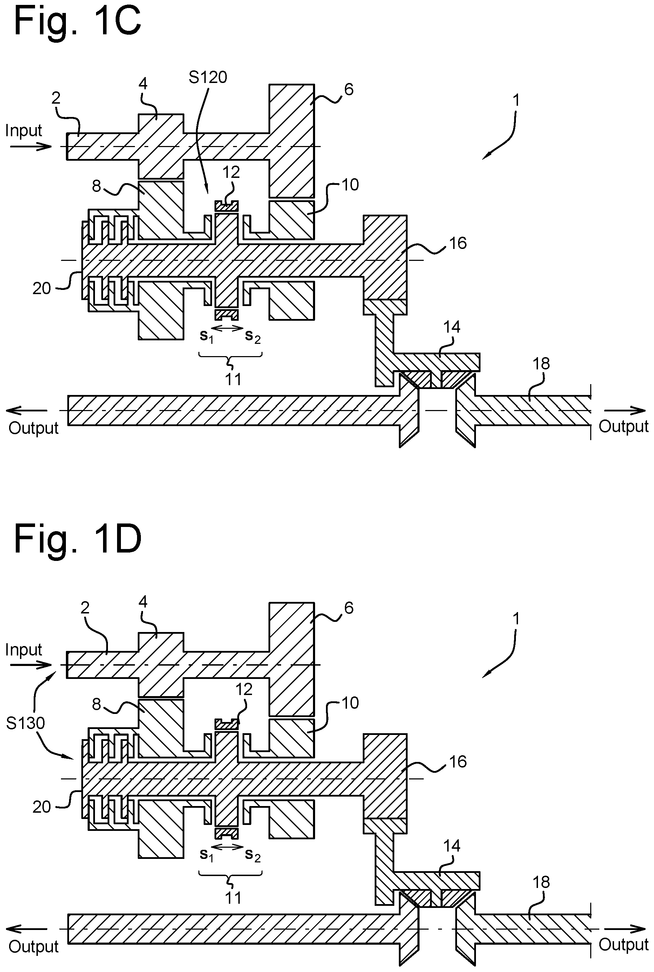

The shift sleeve 12 subsequently moves, S120, to the neutral position, as illustrated in Figure 1C. Torque transfer from the electric motor to the output shaft 18 takes place through the powershift clutch. The powershift clutch 20 is slipping due to differences in speed over the clutch.

In Figure 1D, the powershift clutch is still slipping due to the differences in speed between the first gear 8 and the first tooth wheel 4. Speed synchronization, S130, is now performed, by controlling the rotational speed of the electric motor, applied to the transmission assembly via the input shaft 2, and by operating the powershift clutch. When speed synchronization starts, there is a speed difference over the clutch, i.e., the side of the clutch connected to the wheels and the side of the clutch connected to the electric motor have different speeds. During speed synchronization, the rotational speed, or RPM, of the electric motor is adapted in accordance with the rotational speed of the vehicle wheels, and force is applied to the powershift clutch 20, such that this is further closed. The friction energy in the clutch will assist in the speed synchronization process. When speed synchronization has been reached and the speed synchronization step is finished, there is no speed difference over the clutch any more. That is, the wheel side and the motor side of the clutch have the same rotational speed. Hence, speed synchronization of the assembly 1 is achieved by operating the powershift clutch 20 and controlling the electric motor. The shift sleeve 12 remains in the neutral position until speed synchronization has been achieved.

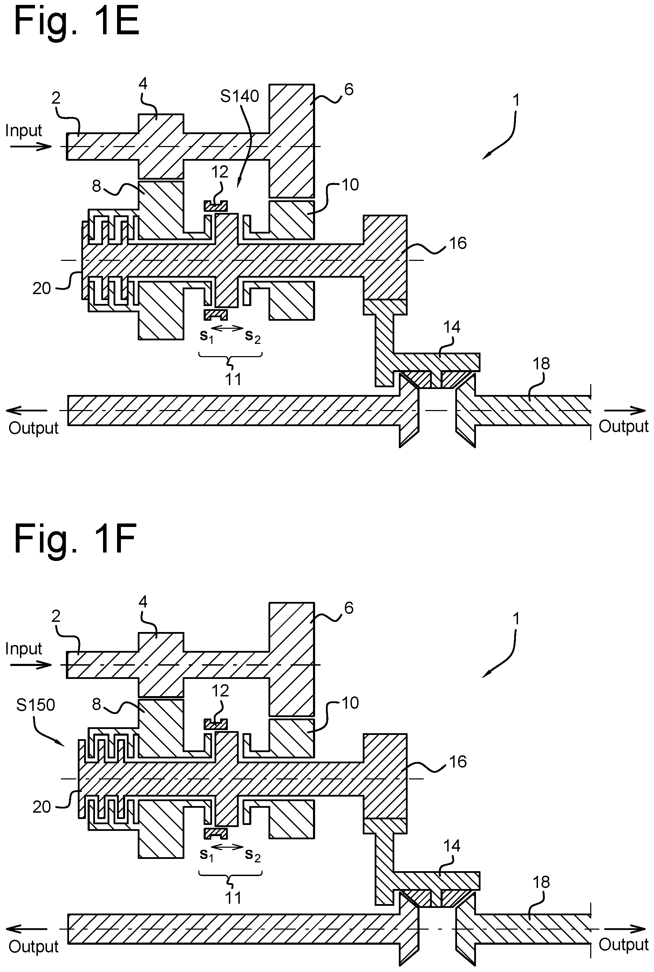

When speed synchronization has been reached, the shift sleeve 12 moves, S140, into the first position, S₁, as illustrated in Figure 1E.

The powershift clutch 20 opens, S150, as illustrated in Figure 1F. Gear shifting to the first gear has been completed, and the vehicle drives normally in the first gear. The dog clutch mechanism 11, comprising the shift sleeve 12, is closed, transferring the torque from the electric motor to the wheels. The powershift clutch 20 is opened, i.e., inactive, and does not take part in torque transfer any more.

The steps of the gear shifting sequence as described herein above is also illustrated schematically in the flow diagram of Figure 2, schematically showing the sequence of steps.

Through the transmission assembly and the gear shifting sequence illustrated and described herein above, a transmission assembly for electric vehicles providing powershifting during downshifting from the second to the first gear is provided. By the powershifting, torque drop during downshifting can be prevented or at least reduced, providing a substantially seemless clutching during gear shifting.

The transmission assembly, comprising a dog clutch transferring torque during driving in either one of the first and second gear, and a single powershift clutch transferring torque during downshifting from the second to the first gear, provides a simple, compact and light-weight transmission assembly providing powershifting during downshifting.

The transmission and associated gear shifting sequence can be applied in battery electric vehicles as well as in hybrid vehicles.

In summary, the transmission assembly of the present invention provides a compact and simple design, enabling reducing, or even avoiding, torque drop during down-shifting from a second gear to a first gear.

## Claims

1. A transmission assembly (1) for an electric vehicle, the transmission assembly comprising a first gear (8) and a second gear (10), the transmission assembly (1) further comprising:
- a torque transfer clutch mechanism (11); and
- a power-shift clutch (20);
the torque transfer clutch mechanism (11) being configured to transfer torque when the transmission assembly is operating in either one of the first gear (8) and the second gear (9); and
the power-shift clutch (20) being configured to transfer torque only during gear-shifting,
**characterized in that**
the power-shift clutch (20) being arranged to transfer torque only during down-shifting from the second gear to the first gear.

2. The transmission assembly (1) according to claim 1, the transmission assembly being a two-speed transmission.

3. The transmission assembly (1) according to any one of the preceding claims, the torque transfer clutch mechanism (11) comprising a dog clutch mechanism.

4. The transmission assembly (1) according to any one of the preceding claims, the torque transfer clutch mechanism (11) comprising a shift sleeve (12) arranged to be moved between a first position (S1) for driving in the first gear (8) and a second position (S2) for driving in the second gear (10).

5. The transmission assembly (1) according to any one of the preceding claims, the power-shift clutch (20) comprising a friction clutch.

6. The transmission assembly (1) according to any one of claims 4 or 5, comprising a single power-shift clutch.

7. The transmission assembly (1) according to any one of the preceding claims, configured to perform speed synchronization of an electric motor with the speed of the vehicle wheels during gear-shifting through activation of the power-shift clutch (20).

8. The transmission assembly (1) according to any one of the preceding claims, the first gear (8) configured to be operative throughout a driving speed range of the vehicle and the second gear (10) is configured to be operative in an upper part of the driving speed range.

9. A method of gear shifting from a second gear (10) to a first gear (8) in a transmission assembly (1) according to any one of the preceding claims in an electric vehicle having an electric motor, in the second gear (10) the electric motor being operating at a lower speed than in the first gear (8), the method comprising:
- opening a torque transfer clutch mechanism (11) which is closed in a second position (S2) corresponding to the second gear;
- closing (S110) a power-shift clutch (20) to transfer torque through the power-shift clutch;
- changing the torque transfer clutch mechanism (11) to a first position (S1) corresponding to the first gear and closing the torque transfer clutch mechanism in the first position; and
- opening the power-shift clutch (20).

10. The method according to claim 9, the power-shift clutch (20) being open when driving in either one of the first gear (8) and the second gear (10).

11. The method according to any one of claims 9 and 10, wherein, :
- prior to opening the torque transfer clutch mechanism (11), the power-shift clutch (20) starting to engage (S110) with the first gear (8);
- the torque transfer clutch mechanism (11) opens and moves to a neutral position (S120); and
- speed synchronization (S130) between the electric motor and the vehicle wheels is performed by applying further force to the powershift clutch (20).

12. The method according to claim 11, wherein, when speed synchronization has been reached:
- the torque transfer clutch mechanism (11) is changed (S140) to the first position and subsequently closed; and
- the power-shift clutch (20) is opened (S150).

## Patentansprüche

1. Getriebeanordnung (1) für ein Elektrofahrzeug, wobei die Getriebeanordnung einen ersten Gang (8) und einen zweiten Gang (10) umfasst, wobei die Getriebeanordnung (1) ferner Folgendes umfasst:
- einen Drehmomentübertragungskupplungsmechanismus (11) und
- eine Lastschaltkupplung (20);
wobei der Drehmomentübertragungsmechanismus (11) dazu ausgelegt ist, das Drehmoment zu übertragen, wenn die Getriebeanordnung im ersten Gang (8) oder im zweiten Gang (9) arbeitet; und
wobei die Lastschaltkupplung (20) dazu ausgelegt ist, das Drehmoment nur beim Schalten zu übertragen, **dadurch gekennzeichnet, dass**
die Lastschaltkupplung (20) dazu angeordnet ist, das Drehmoment nur beim Herunterschalten vom zweiten Gang in den ersten Gang zu übertragen.

2. Getriebeanordnung (1) nach Anspruch 1, wobei die Getriebeanordnung ein Zweiganggetriebe ist.

3. Getriebeanordnung (1) nach einem der vorstehenden Ansprüche, wobei der Drehmomentübertragungskupplungsmechanismus (11) einen Klauenkupplungsmechanismus umfasst.

4. Getriebeanordnung (1) nach einem der vorstehenden Ansprüche, wobei der Drehmomentübertragungskupplungsmechanismus (11) eine Schaltmuffe (12) umfasst, die dazu angeordnet ist, zwischen einer ersten Stellung (S1) zum Fahren im ersten Gang (8) und einer zweiten Stellung (S2) zum Fahren im zweiten Gang (10) beweglich zu sein.

5. Getriebeanordnung (1) nach einem der vorstehenden Ansprüche, wobei die Lastschaltkupplung (20) eine Reibkupplung umfasst.

6. Getriebeanordnung (1) nach einem der Ansprüche 4 oder 5, eine einzelne Lastschaltkupplung umfassend.

7. Getriebeanordnung (1) nach einem der vorstehenden Ansprüche, die dazu ausgelegt ist, eine Drehzahlsynchronisierung eines Elektromotors mit der Drehzahl der Fahrzeugräder beim Schalten durch Aktivieren der Lastschaltkupplung (20) durchzuführen.

8. Getriebeanordnung (1) nach einem der vorstehenden Ansprüche, wobei der erste Gang (8) dazu ausgelegt ist, in einem gesamten Fahrtgeschwindigkeitsbereich des Fahrzeugs funktionsfähig zu ein, und wobei der zweite Gang (10) dazu ausgelegt ist, in einem oberen Teil des Fahrtgeschwindigkeitsbereichs funktionsfähig zu sein.

9. Verfahren zum Schalten von einem zweiten Gang (10) in einen ersten Gang (8) in einer Getriebeanordnung (1) nach einem der vorstehenden Ansprüche in einem Elektrofahrzeug mit einem Elektromotor, wobei der Elektromotor im zweiten Gang (10) mit einer niedrigeren Drehzahl als im ersten Gang (8) arbeitet, wobei das Verfahren Folgendes umfasst:
- Öffnen eines Drehmomentübertragungskupplungsmechanismus (11), der in einer dem zweiten Gang entsprechenden zweiten Stellung (S2) geschlossen ist;
- Schließen (S110) einer Lastschaltkupplung (20), um ein Drehmoment durch die Lastschaltkupplung zu übertragen;
- Wechseln des Drehmomentübertragungskupplungsmechanismus (11) in eine dem ersten Gang entsprechende erste Stellung (S1) und Schließen des Drehmomentübertragungskupplungsmechanismus in der ersten Stellung und
- Öffnen der Lastschaltkupplung (20).

10. Verfahren nach Anspruch 9, wobei die Lastschaltkupplung (20) geöffnet ist, wenn im ersten Gang (8) oder im zweiten Gang (10) gefahren wird.

11. Verfahren nach einem der Ansprüche 9 und 10, wobei:
- vor dem Öffnen des Drehmomentübertragungskupplungsmechanismus (11) die Lastschaltkupplung (20) beginnt, in den ersten Gang (8) einzugreifen (S110);
- sich der Drehmomentübertragungskupplungsmechanismus (11) öffnet und in eine Neutralstellung (S120) bewegt und
- die Drehzahlsynchronisierung (S130) zwischen dem Elektromotor und den Fahrzeugrädern durch Aufbringen einer weiteren Kraft auf die Lastschaltkupplung (20) durchgeführt wird.

12. Verfahren nach Anspruch 11, wobei, wenn die Drehzahlsynchronisierung erreicht ist:
- der Drehmomentübertragungskupplungsmechanismus (11) in die erste Stellung gewechselt (S140) und anschließend geschlossen wird und
- die Lastschaltkupplung (20) geöffnet (S150) wird.

## Revendications

1. Ensemble de transmission (1) pour véhicule électrique, l'ensemble de transmission comprenant un premier engrenage (8) et un second engrenage (10), l'ensemble de transmission (1) comprenant en outre :
- un mécanisme d'embrayage à transfert de couple (11) ; et
- un embrayage à passage sous charge (20) ;
le mécanisme d'embrayage à transfert de couple (11) étant conçu pour transférer le couple lorsque l'ensemble de transmission fonctionne dans l'un ou l'autre du premier engrenage (8) et du second engrenage (9) ; et
l'embrayage à passage sous charge (20) étant conçu pour ne transférer un couple que lors du changement de rapport, **caractérisé en ce que**
l'embrayage à passage sous charge (20) est conçu pour transférer le couple uniquement pendant le rétrogradage du second rapport au premier rapport.

2. Ensemble de transmission (1) selon la revendication 1, l'ensemble de transmission étant une transmission à deux rapports.

3. Ensemble de transmission (1) selon l'une quelconque des revendications précédentes, le mécanisme d'embrayage à transfert de couple (11) comprenant un mécanisme d'embrayage à griffes.

4. Ensemble de transmission (1) selon l'une quelconque des revendications précédentes, le mécanisme d'embrayage à transfert de couple (11) comprenant un manchon de changement de vitesse (12) conçu pour être déplacé entre une première position (S1) pour l'entraînement dans le premier engrenage (8) et une seconde position (S2) pour l'entraînement dans le second engrenage (10).

5. Ensemble de transmission (1) selon l'une quelconque des revendications précédentes, l'embrayage à passage sous charge (20) comprenant un embrayage à friction.

6. Ensemble de transmission (1) selon l'une quelconque des revendications 4 ou 5, comprenant un seul embrayage à passage sous charge.

7. Ensemble de transmission (1) selon l'une quelconque des revendications précédentes, conçu pour effectuer une synchronisation de vitesse d'un moteur électrique avec la vitesse des roues de véhicule pendant le changement de vitesse par l'activation de l'embrayage à passage sous charge (20).

8. Ensemble de transmission (1) selon l'une quelconque des revendications précédentes, le premier engrenage (8) étant conçu pour fonctionner dans toute une plage de vitesses de conduite du véhicule et le second engrenage (10) étant conçu pour fonctionner dans une partie supérieure de la plage de vitesses de conduite.

9. Procédé de changement de vitesse d'un second engrenage (10) à un premier engrenage (8) dans un ensemble de transmission (1) selon l'une quelconque des revendications précédentes dans un véhicule électrique ayant un moteur électrique, dans le second engrenage (10), le moteur électrique fonctionnant à une vitesse inférieure à celle dans le premier engrenage (8), le procédé comprenant les étapes consistant à :
- ouvrir un mécanisme d'embrayage à transfert de couple (11) qui est fermé dans une seconde position (S2) correspondant au second rapport ;
- fermer (S110) un embrayage à passage sous charge (20) pour transférer le couple par l'intermédiaire de l'embrayage à passage sous charge ;
- changer le mécanisme d'embrayage à transfert de couple (11) dans une première position (S1) correspondant au premier rapport et fermer le mécanisme d'embrayage à transfert de couple dans la première position ; et
- ouvrir l'embrayage à passage sous charge (20).

10. Procédé selon la revendication 9, l'embrayage à passage sous charge (20) étant ouvert lors de la conduite dans l'un ou l'autre du premier engrenage (8) et du second engrenage (10).

11. Procédé selon l'une quelconque des revendications 9 et 10,
- avant l'ouverture du mécanisme d'embrayage à transfert de couple (11), l'embrayage à passage sous charge (20) commençant à venir en prise (S110) avec le premier engrenage (8) ;
- le mécanisme d'embrayage à transfert de couple (11) s'ouvrant et passant en position neutre (S120) ; et
- la synchronisation de vitesse (S130) entre le moteur électrique et les roues du véhicule s'effectuant en appliquant une force supplémentaire sur l'embrayage à passage sous charge (20).

12. Procédé selon la revendication 11, lorsque la synchronisation de vitesse a été atteinte :
- le mécanisme d'embrayage à transfert de couple (11) étant déplacé (S140) dans la première position et ultérieurement fermé ; et
- l'embrayage à passage sous charge (20) étant ouvert (S150) .
